Europäisches Patentamt

European Patent Office

Office européen des brevets

(11) Veröffentlichungsnummer: **0 207 274 B1**

# (12) EUROPÄISCHE PATENTSCHRIFT

(45) Veröffentlichungstag der Patentschrift: **07.01.93**

(21) Anmeldenummer: **86106886.4**

(22) Anmeldetag: **21.05.86**

(51) Int. Cl.⁵: **H04B 10/14**

(54) **Schaltungsanordnung zur Ansteuerung einer lichtemittierenden Diode.**

(30) Priorität: **01.06.85 DE 3519711**

(43) Veröffentlichungstag der Anmeldung:
**07.01.87 Patentblatt 87/02**

(45) Bekanntmachung des Hinweises auf die
Patenterteilung:
**07.01.93 Patentblatt 93/01**

(84) Benannte Vertragsstaaten:
**BE DE FR GB IT NL SE**

(56) Entgegenhaltungen:

**IEEE JOURNAL OF SOLID-STATE CIRCUITS,
Band SC-13, Nr. 1, Februar 1978, Seiten
133-138, IEEE; K. ASATANI et al.:
"Linearization of LED nonlinearity by predistortions"**

**PATENT ABSTRACTS OF JAPAN, Band 7, Nr.
194 (E-195)[1339], 24. August 1983 & JP-A-58
094 247**

**ELEKTRONIK, Band 33, Nr. 26, Dezember
1984, Seiten 88-90; W. WIESNER:
"Ansteuerung von LEDs in optischen Sendern"**

(73) Patentinhaber: **Richard Hirschmann GmbH &
Co.
Richard-Hirschmann-Strasse 19 Postfach
110
W-7300 Esslingen a.N.(DE)**

(72) Erfinder: **Ludolf, Wilhelm, Dr.
Wilhelm-Röntgen-Strasse 19
W-7302 Ostfildern 1(DE)**
Erfinder: **Sommer, Rolf-Dieter, Dipl.-Ing.
Lonseerstrasse 9
W-7000 Stuttgart 61(DE)**
Erfinder: **Bachmann, Hermann, Dipl.-Ing, (FH)
Im Fritzen 8
W-7300 Esslingen a.N.(DE)**

(74) Vertreter: **Stadler, Heinz, Dipl.-Ing.
Richard-Hirschmann-Strasse 19 Postfach
110
W-7300 Esslingen a.N.(DE)**

## Beschreibung

Die Erfindung betrifft eine Schaltungsanordnung zur Ansteuerung einer lichtemittierenden Diode (nachfolgend mit LED abgekürzt) mit einer Schaltungsstufe zur Kompensation des Temperatureinflusses auf die Strahlungslleistung, wobei zur Kompensation von Temperaturänderungen, die durch die elektrische Verlustleistung in der LED auftreten, dieser eine nicht-lineare Kompensationsstufe vorgeschaltet ist.

Bekanntermaßen ist die Strahlungsleistung $\phi_0$ einer lichtemittierenden Diode (nachfolgend mit LED abgekürzt) bei gegebenem Durchlaßstrom $I_F$ von der Temperatur abhängig. Um Schwankungen der Strahlungsleistung $\phi_0$ von LED's, die auf Grund von Änderungen der Umgebungstemperatur der LED's herrühren, zu kompensieren, ist es bekannt, NTC-Widerstände oder die Basis-Emitter-Strecken von Transistoren zu verwenden, wie dies beispielsweise in der Zeitschrift "Elektronik", Heft 26, 1984, Seite 90, beschrieben ist. Derartige Schaltungen können jedoch nur langsame, "statische" Temperaturschwankungen kompensieren, nicht aber kurzzeitige, im Betrieb auftretende "dynamische" Temperaturschwankungen, die durch Temperaturänderungen der Dioden-Sperrschicht auf Grund der in der Sperrschicht auftretenden Verlustleistungsänderungen hervorgerufen werden.

Für die analoge Datenübertragung in opto-elektronischen Systemen wird in den meisten Fällen ein linearer Zusammenhang zwischen Durchlaßstrom $I_F$ und Strahlungsleistung $\phi_0$ innerhalb des normalen Betriebsbereiches einer LED angenommen, d.h. Änderungen der Strahlungsleistung auf Grund von Schwankungen der Sperrschichttemperatur werden nicht berücksichtigt. Insbesondere bei höherwertigen, analogen opto-elektrischen Datenübertragungssystemen, bei der eine direkte Intensitätsmodulation der LED erfolgt, kann das nichtlineare Verhalten der LED's nicht mehr vernachlässigt werden, wie dies in digitalen opto-elektrischen Datenübertragungssystemen oder im Impulsbetrieb möglich ist.

Aus Patent Abstracts of Japan, Band 7 bis 04-06-1983 (& JP-A-58094247) ist eine Schaltungsanordnung zur Ansteuerung lichtemittierender Halbleiterelemente bekannt, mit der ebenfalls Temperatureinflüsse auf die Strahlungsleistung kompensiert werden sollen. Mit der bekannten Schaltungsanordnung ist es zwar möglich, Temperatureinflüsse zu kompensieren, die im Zusammenhang mit dem Stromanstieg, also der ansteigenden Flanke von Impulsen stehen. Bei der Übertragung von Signalen, bei denen Impulse in beiden Schwingungsrichtungen auftreten, wie dies etwa bei Videosignalen der Fall ist, ist es mit der bekannten Schaltung jedoch nicht möglich, eine für die Übertragung solcher Signale verwendete LED bezüglich der durch Verlustleistungen in ihr entstehenden Temperaturänderungen für beide Impulsrichtungen zu kompensieren.

Der Erfindung liegt daher die Aufgabe zugrunde, eine Schaltungsanordnung zur Ansteuerung einer LED zu schaffen, mit welcher die Kompensation der die Strahlungsleistung beeinflussenden Temperaturänderungen über einen größeren Bereich wirksam ist, und insbesondere ein thermisches Überschwingverhalten der LED kompensiert werden kann.

Diese Aufgabe wird erfindungsgemäß gelöst durch zwei nichtlineare Kompensationsstufen und eine Schaltungsstufe, die zwischen den ansteigenden und abfallenden Flanken des LED-Ansteuersignals unterscheidet und in Abhängigkeit davon die eine oder die andere der beiden Kompensationsstufen wirksam macht.

Anhand von Untersuchungen, die im Zusammenhang mit der vorliegenden Erfindung durchgeführt wurden, hat es sich herausgestellt, daß die Temperaturänderungen der LED-Sperrschicht und damit die Änderungen der Strahlungsintensität für ansteigende und abfallende Flanken des LED-Ansteuersignals unterschiedlich sind. Dieser Sachverhalt wird im weiteren noch ausführlicher erläutert. Zur Temperaturkompensation bezüglich der ansteigenden und abfallenden Flanken sind daher jeweils unabhängige nichtlineare Kompensationsstufen vorgesehen, die abwechselnd in Funktion gesetzt werden, wenn eine ansteigende bzw. abfallende Flanke auftritt. Die zwischen den ansteigenden und abfallenden Flanken unterscheidende Schaltungsstufe, die vorzugsweise eine Differentiator-Schaltung sein kann, bewirkt diese Umschaltung auf die jeweilige Kompensationsstufe. Durch diese erfinderische Maßnahme ergibt sich eine bessere und verzerrungsfreiere Übertragung. Mit der erfindungsgemäßen Schaltungsanordnung ist es also möglich, daß auch kurzzeitige, sogenannte "dynamische" Temperatur- und damit Strahlungsleistungs-Schwankungen kompensiert werden können, die auf eine dynamische Änderung der internen Verlustleistung der LED, eine Änderung der Sperrschichttemperatur und letztlich eine Änderung des optoelektrischen Wirkungsgrades der LED zurückzuführen ist. Für einen höherwertigen dynamischen Betrieb bei der Ansteuerung der LED, etwa durch Video-Signale, ist damit eine im wesentlichen thermisch verzerrungsfreie Übertragung möglich. Insbesondere auch für die Übertragung von digitalen Signalen ergibt sich eine wesentlich geringere Verzerrung und dadurch kann die Übertragunsstrecke von Lichtwellenleitern unter Verwendung von LED-Sendern wesentlich erweitert werden. Insbesondere ist es damit möglich, das thermische Überschwingverhalten der LED zu kompensieren, wie dies im weiteren noch ausgeführt wird.

Ausgehend von einer eingangs genannten, bekannten Schaltungsanordnung wird die gestellte Aufgabe gemäß einer alternativen Ausführungsform der erfindungsgemäßen Schaltung gelöst durch eine zweite mit der ersten nicht-linearen Kompensationsstufe in Reihe geschaltete nicht-lineare Kompensationsstufe und eine Schaltungsstufe, die zwischen den ansteigenden und abfallenden Flanken des LED-Ansteuersignals unterscheidet und bei Auftreten einer abfallenden Flanke die zweite nicht-lineare Kompensationsstufe zusätzlich zur ersten Kompensationsstufe wirksam macht.

Statt zwischen zwei nicht-linearen Kompensationstufen in Abhängigkeit von abfallender und ansteigender Flanke umzuschalten, ist bei dieser Ausführungsform zusätzlich zu einer ersten nicht linearen Kompensationsstufe vorgesehen, eine zweite nicht-lineare Kompensationsstufe, die mit der ersten in Reihe liegt, in Abhängigkeit davon zusätzlich wirksam zu machen oder nicht, ob eine ansteigende oder abfallende Flanke des LED-Ansteuersignals auftritt.

Die Temperatur- bzw. Strahlungsleistungs-Kompensation wird im wesentlichen vollständig für die ansteigende oder die abfallende Flanke mit der ersten Kompensationsstufe durchgeführt. Die Restkompensation erfolgt dann für die entgegengesetzt verlaufende Flanke mit der zweiten Kompensationsstufe, die der ersten Kompensationsstufe mittels der zwischen der ansteigenden und abfallenden Flanke unterscheidenden Schaltungsstufe zusätzlich zugeschaltet wird. Wie im weiteren noch ausführlich erläutert wird, unterscheidet sich der Temperaturverlauf in der LED bei Auftreten einer ansteigenden Flanke von dem Temperaturverlauf, der bei einer abfallenden Flanke auftritt. Statt für die Kompensation im Zusammenhang mit der ansteigenden und abfallenden Flanke je eine eigene Kompensationsstufe vorzusehen, wie dies bei der weiter oben beschriebenen Ausführungsform vorgenommen wurde, kann lediglich die von der ersten Kompensationsstufe auf Grund der unterschiedlichen Temperaturverläufe nicht erfasste Restkompensation von der zweiten, zugeschalteten Kompensationsstufe zusätzlich vorgenommen werden.

Hinsichtlich eines verringerten technischen Aufwandes besonders vorteilhafte Ausführungsweise der vorliegenden Erfindung besteht darin, daß die Zeitkonstante der nicht-linearen Kompensationsstufe zwischen zwei Zeitkonstantwerten umschaltbar ist, und die zwischen den ansteigenden und abfallenden Flanken des LED-Ansteuersignals unterscheidende Schaltungsstufe die Umschaltung zwischen den zwei Zeitkonstanten vornimmt. Auf diese Weise ergibt sich ein kostengünstiger Aufbau insofern, als nur noch eine Kompensationsstufe erforderlich ist, die dennoch die Kompensation der Temperatur- bzw. Strahlungsintensitätsänderungen jeweils bezogen auf das Auftreten der ansteigenden und abfallenden Flanken unabhängig voneinander durchführt.

Vorzugsweise weist die nicht-lineare Kompensationsstufe bzw. weisen die nicht-linearen Kompensationsstufen im wesentlichen eine RC-Schaltung auf. Für besondere Anwendungsfälle ist jedoch auch die Verwendung von RL-Schaltungen anstelle der RC-Schaltung möglich.

Die Erfindung wird nachstehend anhand von Diagrammen, schematischen Zeichnungen und Ausführungsbeispielen ausführlich erläutert. Es zeigen:

Fig. 1     das Ausgangssignal einer mit einem Rechteckimpuls-Signal angesteuerten LED ohne Verwendung der erfinderischen Schaltungsanordnung;

Fig. 2     ein Ersatzschaltbild für das thermische Verhalten einer LED;

Fig. 3     die Abhängigkeit der Strahlungsleistung einer LED in Abhängigkeit vom Durchlaßstrom;

Fig. 4     eine Ausführungsform der erfindungsgemäßen Schaltungsanordnung;

Fig. 5     ein Ausführungsbeispiel für eine Kompensationsstufe, wie sie im Zusammenhang mit der vorliegenden Erfindung angewandt werden kann;

Fig. 6     eine weitere Ausführungsform der erfindungsgemäßen Schaltungsanordnung und

Fig. 7     eine dritte Ausführungsform der erfindungsgemäßen Schaltungsanordnung.

Wie bereits erwähnt, ist die Strahlungsleistung einer LED nicht nur vom Durchlaßstrom $I_F$, sondern auch von der Sperrschichttemperatur $T_s$ abhängig:

$$\phi_0 = f_1 (I_F, T_s).$$

Die Sperrschichttemperatur wiederum hängt von der in der Sperrschicht auftretenden Verlustleistung $P_{tot}$ ab, die sich aus dem Produkt der Durchlaßspannung $U_F$ der LED und des Durchlaßstromes $I_F$ ergibt:

$$P_{tot} = U_F \cdot I_F.$$

Mit steigendem Durchlaßstrom steigt zwar die Strahlungsleistung an, jedoch nimmt auch die Verlustleistung in der Sperrschicht zu, so daß gleichzeitig auch die Sperrschichttemperatur $T_S$ ansteigt. Mit ansteigender Sperrschichttemperatur nimmt jedoch die Strahlungsleistung ab.

Der Wirkungsgrad ($\eta$) einer LED ist das Verhältnis von Strahlungsleistung $\phi_0$ zu elektrischer Leistung $P_{tot}$

$$\eta = \frac{\phi_o}{P_{tot}} \ .$$

$\eta$ ist also temperaturabhängig. In einem Sperrschicht-Temperaturbereich von

$$- 60° \, C < T_S < + 100° \, C$$

gilt für den Temperaturkoeffizienten TK

$$TK \approx - 0,6\%/° \, C,$$

bezogen auf die maximale Strahlungsleistung bei den elektrischen Maximalwerten für $P_{tot}$.

Bei Gleichstromansteuerung oder bei Ansteuersignalen mit langsamen Signaländerungen bzw. kleinen Frequenzen ist die Abhängigkeit der Strahlungsleistung vom Durchlaßstrom praktisch linear bzw. geringe Nichtlinearitäten können bei einer solchen im wesentlichen analogen Datenübertragung vernachlässigt werden. Für den Wärmeausgleich zwischen der Sperrschicht und dem Halbleiterplättchen bzw. dem Gehäuse der LED ist ausreichend Zeit vorhanden, um bei allmählicher Änderung des Durchlaßstromes die dabei sich ändernde Verlustleistung bzw. Sperrschichttemperatur auszugleichen.

Die Annahme eines linearen Verhaltens der LED bei der Umsetzung des Durchlaßstromes in Strahlungsleistung kann jedoch für die Übertragung höherfrequenter Signale, etwa von Videosignalen, und digitaler Daten, etwa von Rechteckimpulse-Signalen, nicht aufrecht erhalten werden. Dies wird an nachfolgend erläuterten Untersuchungen deutlich:

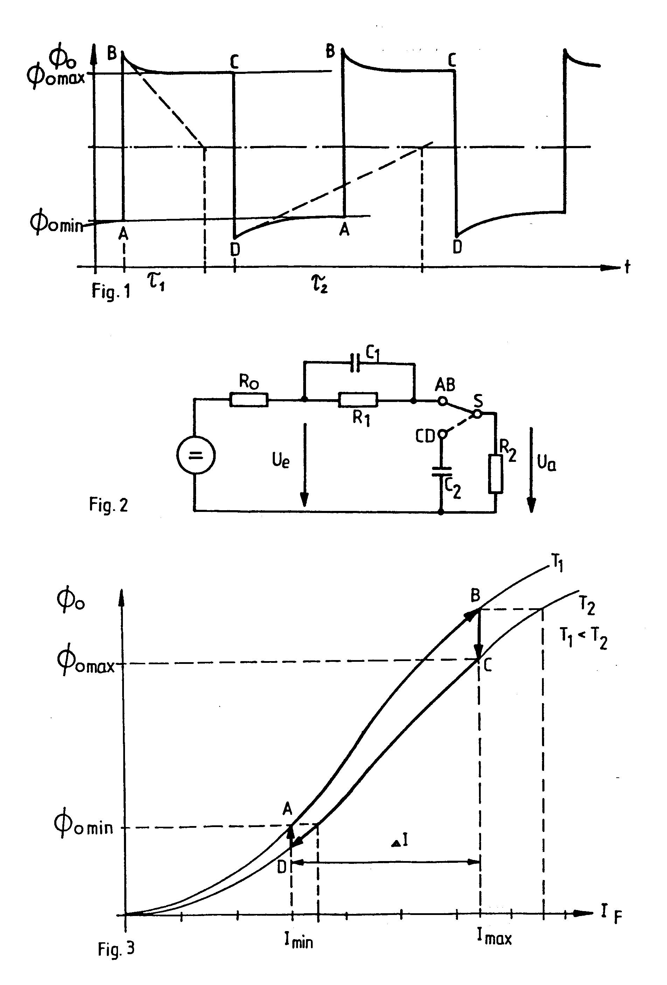

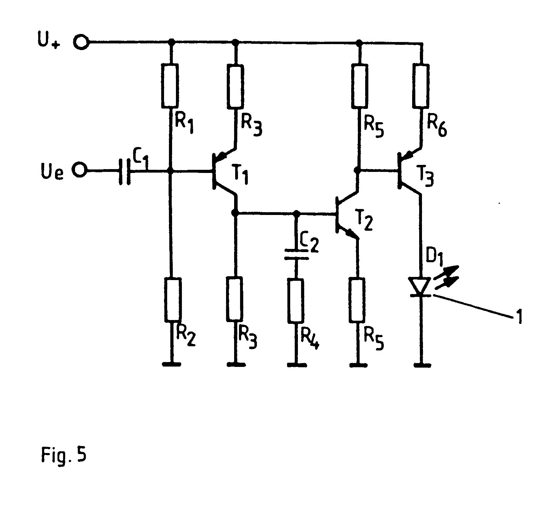

Fig. 1 zeigt den Verlauf der Strahlungsleistung $\phi_0$ bei Anlegen eines Rechteckimpulses mit einer Frequenz von 1 kHz. Als LED wurde eine Infrarot-LED vom Typ 1A148 (ASEA HAFO) verwendet. Der Durchlaßstromwert $I_{max}$ betrug 100 mA und der Durchlaßstromwert $I_{min}$ betrug 10 mA, so daß sich bei diesem Beispiel ein Stromhub $\Delta I$ von 90 mA ergibt.

Wie das in Fig. 1 dargestellte optische Ausgangssignal der Diode zeigt, treten an den Flanken Überschwingungen auf. Wie sich weiter zeigt, weist die Überschwingung an der ansteigenden Flanke eine Zeitkonstante $\tau_1$ auf, die nicht gleich, sondern kleiner als die Zeitkonstante $\tau_2$ der Überschwingung an der abfallenden Flanke ist.

Dieses thermische Verhalten der LED läßt sich anhand des in Fig. 2 dargestellten Ersatzschaltbildes verdeutlichen:
Bei Auftreten der ansteigenden Flanke A B (vgl. Fig. 1) befindet sich der Schalter S dieses Ersatzschaltbildes in der dargestellten Schalterstellung, so daß das aus dem Kondensator $C_1$ und $R_2$ bestehende RC-Glied wirkt, wobei die Zeitkonstanten $\tau_1 \approx C_1 R_2$ ist. An der abfallenden Flanke CD (vgl. Fig. 1) befindet sich der Schalter in der strichliniert dargestellten Schalterstellung, so daß das RC-Glied $C_2 R_2$ wirksam ist, wobei $\tau_2 \approx C_2 R_2$ ist.
$\tau_1$ ist dabei kleiner als $\tau_2$. Die Eingangsspannung $U_e$ für die LED tritt beim Ersatzschaltbild an dem der Strom- bzw. Spannungsquelle abgewandten Anschluß des Widerstandes $R_0$ auf, und die Ausgangsspannung, die der Ausgangsstrahlungsleistung $\phi_0$ der LED entspricht, wird über dem Widerstand $R_2$ abgegriffen.

Für einen LED-Durchlaßstrom $I_{max}$ von 100 mA beträgt die Zeitkonstante $\tau_1$ bei diesem Beispiel 30 $\mu$s und für $I_{min}$ von 10 mA beträgt die Zeitkonstante $\tau_2$ etwa 45 $\mu$s.

Das zuvor beschriebene thermische Verhalten von LED's bzw. das Phänomen der Überschwingungen bei Verwendung der LED für hochfrequente oder Impulssignale mit schnellen Amplitudenänderungen wird nachfolgend unter Bezug auf Fig. 3 hinsichtlich der dabei auftretenden physikalischen Vorgänge näher erläutert und erklärt.

Wie bereits ausgeführt, hängt die Sperrschichttemperatur $T_S$ und damit die Strahlungsleistung $\phi_0$ von der in der LED auftretenden elektrischen Verlustleistung ab, die in der Sperrschicht zum größten Teil in Wärme umgesetzt wird. Für das Beispiel einer Infrarot-LED vom Typ 1A148 beträgt die Vorwärtsspannung $U_F$ 1,3 Volt bei $I_{min}$ von 10 mA und 1,8 V bei $I_{max}$ von 100 mA. Daraus ergeben sich die Verlustleistungen

$$P_{tot}(I_{min}) = 13 \text{ mW und}$$
$$P_{tot}(I_{max}) = 180 \text{ mW.}$$

Der Hub der Verlustleistung $P_{tot}$ beträgt also 167 mW.

In Fig. 3 ist die Strahlungsleistung $\phi_0$ über dem angelegten Durchlaßstrom $I_F$ aufgetragen. Die Buchstaben A, B, C, D entsprechen den Signalpunkten A, B, C und D in Fig. 1. Bei den nachfolgenden Erläuterungen wird sowohl auf Fig. 1, als auch auf Fig. 3 Bezug genommen.

Im Punkt A, wenn also der Durchlaßstrom $I_F$ seinen minimalen Wert $I_{min}$ aufweist, ist die Sperrschicht relativ kalt. Wie bereits angeführt wurde, ist die Strahlungsleistung bzw. der Wirkungsgrad einer LED umso größer, je kälter die Sperrschicht ist. Im Punkt A ist für $I_{min}$ die Strahlungsleistung $\phi_{0min}$ (vgl. Fig. 3). Beim Sprung der Vorwärtsspannung bzw. des Durchlaßstromes von $I_{min}$ auf $I_{max}$, d.h. vom Punkt A nach B wirkt sich die dabei ansteigende elektrische Verlustleistung nicht sofort bzw. nur verzögert auf eine Erwärmung der Sperrschicht aus, so daß der Wirkungsgrad der LED bezüglich des Temperaturverhaltens zunächst noch gleich bleibt und sich daher im Punkt B eine über der Strahlungsleistung $\phi_{0max}$ liegende Strahlungsleistung ergibt. Die Sperrschicht erwärmt sich jedoch danach, so daß der Wirkungsgrad entsprechend dem Kurvenverlauf nach dem Punkt B in Fig. 1 absinkt und sich die Strahlungsleistung $\phi_{0max}$ in Fig. 3 einstellt. In Fig. 3 befindet man sich jetzt also im Punkt C. Der obere Kurvenverlauf in Fig. 3, auf dem die Punkte A und B liegen, ergibt sich für eine im wesentlichen konstante Temperatur $T_1$. Diese Temperatur $T_1$ ist kleiner als die im wesentlichen konstante Temperatur $T_2$, für die sich der in Fig. 3 dargestellte untere Kurvenverlauf ergibt, auf dem die Punkte C und D liegen. Mit anderen Worten, der obere Kurvenverlauf mit den Punkten A und B ergibt sich für eine kältere Sperrschicht und der untere Kurvenverlauf mit den Punkten D und C ergibt sich für eine wärmere Sperrschicht der LED.

Die Sperrschicht hat im Punkt C thermisch einen stationären Zustand erreicht, der sich dadurch einstellt, daß die Sperrschicht nach einer bestimmten Zeit mit dem Gehäuse im thermischen Gleichgewicht steht.

Im Punkt C springt der Durchlaßstrom nun wieder von $I_{max}$ auf $I_{min}$ (vgl. Fig. 3) und die Strahlungsleistung $\phi_0$ fällt entsprechend ab (vgl. Fig. 1). Zunächst bleibt die Sperrschicht jedoch warm, so daß bezüglich des Temperaturverhaltens der LED die Strahlungsleistung unter den Wert $\phi_{0min}$ abfällt und dadurch der Strahlungsleistungsverlauf überschwingt (vgl. Fig. 1D). Da auf Grund der nicht mehr vorhandenen bzw. kleinen elektrischen Verlustleistung der Sperrschicht keine weitere innere Wärme zugeführt wird, kann sich diese durch Wärmeabgabe ans Gehäuse abkühlen, so daß dadurch die Strahlungsleistung $\phi_{0min}$ gemäß dem in Fig. 1 nach dem Punkt D dargestellten Kurvenverlauf allmählich steigt und im Diagramm von Fig. 3 den Punkt A erreicht, an dem die Strahlungsleistung den Wert $\phi_{0min}$ aufweist.

Nun beginnt der nächste Zyklusablauf.

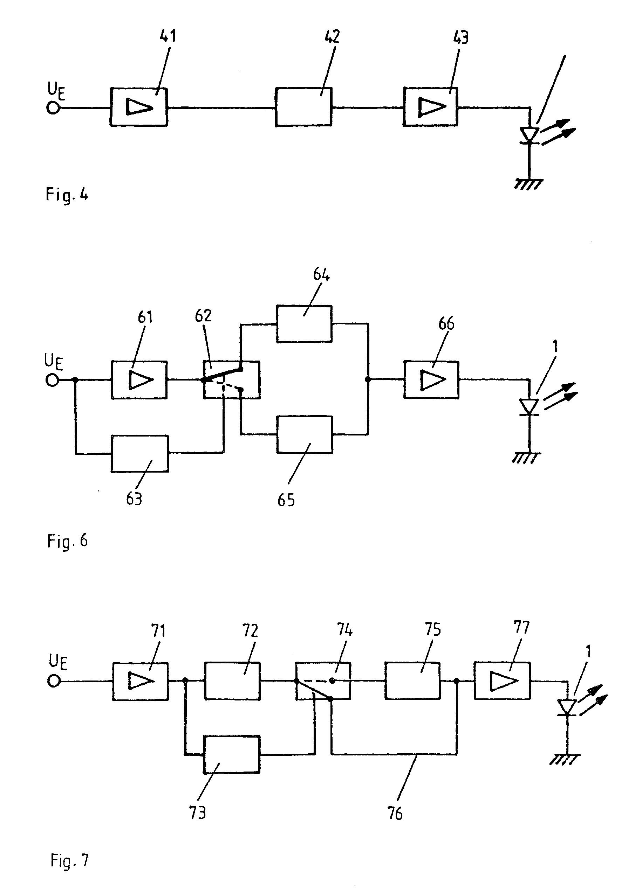

Anhand von Untersuchungen und Experimenten, die im Zusammenhang mit der vorliegenden Erfindung durchgeführt wurden, wurden die zuvor erläuterten Erkenntnisse gewonnen. Um die im Zusammenhang mit dem thermischen Verhalten einer LED auftretenden Signalverzerrungen, wie sie zuvor eingehend beschrieben wurde, zu kompensieren, wurde die erfindungsgemäße Schaltungsanordnung vorgeschlagen, von der in Fig. 4 ein Ausführungsbeispiel dargestellt ist.

Die am Eingang der Schaltungsanordnung anliegende Eingangsspannung $U_e$ wird in einem ersten Verstärker 41 verstärkt und einer Kompensationsstufe 42 zugeleitet, die so aufgebaut ist, daß sie den Strom- bzw. Spannungsverlauf für die Ansteuerung der LED gerade so umformt, daß die auf Grund des thermischen Verhaltens der LED auftretenden Verzerrungen, wie Überschwingungen, kompensiert werden. Das Ausgangsignal der Kompensationsstufe 42 kann mittels eines zweiten Verstärkers 43 nochmals verstärkt werden.

Ein Ausführungsbeispiel für die Kompensationsstufe ist in Fig. 5 dargestellt. Die Eingangsspannung $U_e$ gelangt über einen Trennkondensator $C_1$ an den Verbindungspunkt zweier Widerstände $R_1$ und $R_2$, die zwischen der Betriebsspannung $U_+$ und Masse liegen und als Spannungsteiler dienen. Der Verbindungspunkt der Widerstände $R_1$ und $R_2$ ist mit der Basis eines pnp-Transistors $T_1$ verbunden. Der Emitter dieses Transistors $T_1$ liegt über einen Emitterwiderstand $R_3$ an der Betriebsspannungsquelle $U_+$ an, und der Kollektor dieses Transistors $T_1$ ist über einen Kollektorwiderstand $R_3$ mit Masse verbunden. Diesem Kollektorwiderstand $R_3$ liegt eine Reihenschaltung aus einem Kondensator $C_2$ und einem Widerstand $R_4$ parallel. Der Verbindungspunkt zwischen Widerstand $R_3$ und Kollektor des ersten Transistors $T_1$ ist mit der Basis eines zweiten Transistors $T_2$ vom npn-Typ verbunden, dessen Kollektor über einen Kollektorwiderstand $R_5$ an der Betriebsspannungsquelle $U_+$, und dessen Emitter über einen Emitterwiderstand $R_7$ an Masse anliegt. Der Kollektor des zweiten Transistors $T_2$ ist mit der Basis eines dritten Transistors $T_3$ vom pnp-Typ verbunden, dessen Emitter über einen Emitterwiderstand $R_6$ an der Betriebsspannungsquelle $U_+$ anliegt. Der Kollektor des dritten Transistors $T_3$ ist mit einer LED 1 verbunden, deren Kathode an Masse liegt.

Diese in Fig. 5 dargestellte Schaltungsanordnung als Beispiel für eine Kompensationsstufe, wie sie nach der vorliegenden Erfindung verwendet wird, formt das LED-Ansteuersignal $U_e$ mittels eines R-C-Gliedes $C_2 R_3$ derart um, daß Verzerrungen des LED-Ausgangssignals, die durch das thermische Verhalten der LED hervorgerufen werden, kompensiert werden. Das heißt, das Signal mit der die LED angesteuert wird, wird erfindungsgemäß gerade so umgeformt, daß sich im wesentlichen ein umgekehrt proportionaler Signalverlauf zum Überschwing-Verlauf des Ausgangssignals der LED 1 ergibt.

Selbstverständlich ist es dem Fachmann ohne weiteres möglich, eine andere Kompensationsstufe als die in Fig. 5 gezeigte zu wählen und/oder die Kompensationsstufe so auszubilden, daß eine optimale Kompensation der thermisch bedingten Verzerrungen erfolgt, die bei der Verwendung der LED im Impulsbetrieb oder bei Übertragungen von Videosignalen auftreten. Insbesondere kann statt eines RC-Gliedes auch ein LR-Glied verwendet werden.

Wie bereits erwähnt, wurde bei Untersuchungen im Zusammenhang mit der vorliegenden Erfindung weiterhin festgestellt, daß die Überschwingung bei einer ansteigenden Signalflanke mit einer anderen, nämlich einer kleineren Zeitkonstante $\tau_1$ "ausschwingt" als die Überschwingung bei einer abfallenden Flanke, deren Zeitkonstante $\tau_2$ für das "Ausschwingen" größer ist (vgl. das Diagramm in Fig. 1 sowie das Ersatzschaltbild gemäß Fig. 2). Dieses Phänomen unterschiedlicher Zeitkonstanten für das Überschwingverhalten bei ansteigender und abfallender Flanke kann physikalisch folgendermaßen erklärt werden:

Beim Sprung des Durchlaßstroms $I_F$ von $I_{min}$ auf $I_{max}$ (vgl. Fig. 1) vom Punkt A auf den Punkt B, also beim positiven Sprung, erhitzt sich auf Grund der elektrischen Verlustleistung die Sperrschicht relativ schnell. Das Halbleiterplättchen steht mit dem Gehäuse der LED in Wärmekontakt und gibt diesem seine Wärme kontinuierlich ab. Da wegen des über die Impulsbreite hinweg anstehenden maximalen Durchlaßstroms $I_{max}$ die Sperrschicht bzw. dem Halbleiterchip auf Grund der inneren, elektrischen Verlustleistung weiterhin Wärme zugeleitet wird, bleibt die Sperrschicht immer erheblich wärmer als das Gehäuse.

Steht das Halbleiterplättchen dann mit dem LED-Gehäuse in thermischem Gleichgewicht, ist der stationäre Zustand erreicht.

Beim sprunghaften Übergang des Durchlaßstromes von $I_{max}$ auf $I_{min}$ (vom Punkt C zum Punkt D in Fig. 1) verringert die Verlustleistung in der Sperrschicht sprungartig. Das Halbleiterplättchen kann seine Wärme jedoch nur relativ langsam an das LED-Gehäuse abgeben, so daß auch die Sperrschichttemperatur nur langsam abnimmt und die Strahlungsleistung der Diode entsprechend auch nur langsam, d.h. langsamer zunimmt als sie beim Übergang des Durchlaßstromes von $I_{min}$ auf $I_{max}$ - (d.h. vom Punkt A zum Punkt B in Fig. 1) auf den stationären Zustand abnimmt. Das heißt, für die ansteigende Flanke und die abnehmende Flanke ergeben sich unterschiedliche Zeitkonstanten , wobei $\tau_1$ kleiner $\tau_2$ ist.

Dieses weitere, im Zusammenhang mit der vorliegenden Erfindung festgestellte Phänomen ermöglicht es, die auf Grund thermischer Einflüsse hervorgerufenen dynamischen Verzerrungen bei LED's noch besser zu kompensieren. Ein weiteres, besonders vorteilhaftes Ausführungsbeispiel wird nachfolgend anhand von Fig. 6 erläutert. Die LED-Ansteuerspannung $U_e$ wird, gegebenenfalls über einen ersten Verstärker 61, sowohl einer Umschaltstufe 62 als auch einer zwischen den ansteigenden und abfallenden Flanken des LED-Ansteuersignals unterscheidende Schaltungsstufe 63, d.h. einem Differentiator 63, zugeleitet. Das Ausgangssignal des Differentiators 63 schaltet die Umschaltstufe 62 in Abhängigkeit davon, ob eine ansteigende oder eine abfallende Flanke festgestellt wurde, in den oberen oder den unteren Schaltzustand, so daß das Ansteuersignal $U_e$ entweder über eine Kompensatorstufe 64 oder über eine Kompensatorstufe 65 - und gegebenenfalls über einen zweiten Verstärker 66 - an die LED 1 gelangt.

Wie zuvor erläutert wurde, tritt bei der ansteigenden Flanke ein anderes Überschwingverhalten als bei der abfallenden Flanke auf, d.h. die Zeitkonstanten $\tau_1$ und $\tau_2$ unterscheiden sich. Um beide Überschwingvorgänge optimal kompensieren zu können, werden für diese beiden unterschiedlichen Verzerrungen jeweils getrennte, unterschiedliche Kompensationsstufen 64 und 65 verwendet, die mittels des Differentiators 63 und der Umschaltstufe 62 jeweils in Abhängigkeit vom Auftreten einer ansteigenden oder einer abfallenden Flanke abwechselnd in der Kompensationsschaltung wirksam gemacht werden. Auf diese Weise ergibt sich eine optimale Kompensation der thermisch bedingten Verzerrungen bei hochwertigen LED-Übertragungssystemen.

Gemäß einer weiteren Ausgestaltung der Erfindung ist der Differentiator 63 so ausgebildet, daß er nur bei Auftreten von Flanken mit einer bestimmten Mindeststeilheit ein Ausgangssignal zur Umschaltung der Umschaltstufe 62 bereitstellt. Wenn die Steilheit unterhalb der Mindeststeilheit ist, wird zwischen den Kompensationsstufen 64 und 65 nicht umgeschaltet.

Wie aus den vorausgegangenen Erläuterungen deutlich wurde, ist eine Kompensation insbesondere dann erforderlich, wenn die Ansteuersignale sich relativ kurzzeitig ändern, d.h. Amplitudensprünge mit kurzen Anstiegszeiten aufweisen, wie sie z.B. in Videosignalen (tr≈200 μs) auftreten. Wenn die Signaländerung relativ langsam erfolgt, besteht relativ gesehen ausreichend Zeit für einen Temperaturausgleich zwischen der Sperrschicht und dem LED-Gehäuse bzw. der Umgebung, so daß Überschwingungen bzw. Verzerrungen auf Grund einer kurzzeitigen Änderung der Sperrschichttemperatur nicht oder nicht merklich das Ausgangssignal der LED verzerren.

Eine weitere Ausführungsform der Erfindung besteht darin, die in Fig. 6 schematisch dargestellten beiden getrennten Kompensationsstufen 64 und 65 in einer Kombinationsstufe zu vereinigen und bei der Verwendung von RC- und/oder LR-Gliedern für die Signalformung des Ansteuersignals für die LED lediglich innerhalb der einzigen Umschaltstufe eine Umschaltung zwischen zwei Zeitkonstantenwerten $\tau_1$ und $\tau_2$ vorzunehmen, etwa dadurch, daß die Kondensator-, Widerstands- und/oder Induktionswerte bei Auftreten einer ansteigenden oder abfallenden Flanke des LED-Ansteuersignals geändert werden. Dadurch kann die erfindungsgemäße Schaltungsanordnung noch weiter vereinfacht und kostengünstig gefertigt werden.

In Fig. 7 ist eine weitere sehr vorteilhafte Ausführungsform der erfindungsgemäßen Schaltungsanordnung dargestellt. Das Ansteuersignal $U_e$ wird - gegebenenfalls über einen ersten Verstärker 71 einer ersten Kompensationsstufe 72 und gleichzeitig einem Differentiator 73 zugeleitet, der in Abhängigkeit davon, ob eine ansteigende oder abfallende Flanke auftritt, eine Umschaltstufe 74 umschaltet, die der ersten Kompensationsstufe 72 nachgeschaltet ist. Ein Ausgang der Umschaltstufe 74 ist mit einer zweiten Kompensationsstufe 75 verbunden und am zweiten Ausgang der Umschaltstufe 74 liegt eine Umgehungsleitung 76 an, mit der die zweite Kompensationsstufe 75 umgangen bzw. unwirksam gemacht werden kann. Das Ausgangssignal der zweiten Kompensationsstufe 75 bzw. der ersten Kompensationsstufe 72 bei wirksamer Umgehungsleitung 76 gelangt - gegebenenfalls über einen zweiten Verstärker - an die LED 1.

Wie bereits ausgeführt unterscheiden sich die Zeitkonstanten für die Verzerrungen bezüglich der ansteigenden und abfallenden Flanke des Ansteuersignals. Mit einer Kompensationsstufe kann daher entweder die bei ansteigender Flanke auftretende Verzerrung oder die bei abfallender Flanke auftretende Verzerrung vollständig kompensiert werden, und von der jeweils anderen Verzerrung bleibt eine gewisse Restverzerrung übrig. Diese Restverzerrung kann mittels einer zusätzlichen Kompensationsstufe kompensiert werden, die jeweils für die Flanke, für die eine Restverzerrung übrig bleibt, aktiviert wird. Diese zusätzliche Kompensationsstufe ist die in Fig. 7 dargestellte zweite Kompensationsstufe 75, die jeweils bei Auftreten der Flanke, die noch nicht vollständig kompensiert ist, mittels des Differentiators 73 und der Umschaltstufe 74 wirksam gemacht wird.

**Patentansprüche**

1. Schaltungsanordnung zur Ansteuerung einer lichtemittierenden Diode mit einer Schaltungsstufe zur Kompensation des Temperatureinflusses auf die Strahlungsleistung, wobei zur Kompensation von Temperaturänderungen, die durch die elektrische Verlustleistung in der LED auftreten, dieser eine nicht-lineare Kompensationsstufe vorgeschaltet ist, **gekennzeichnet** durch zwei nicht-lineare Kompensationsstufen (64,65) und eine Schaltungsstufe (63), die zwischen den ansteigenden und abfallender Flanken des LED-Ansteuersignals ($U_E$) unterscheidet und in Abhängigkeit davon die eine oder die andere der beiden Kompensationsstufen (64,65) wirksam macht.

2. Schaltungsanordnung zur Ansteuerung einer lichtemittierenden Diode mit einer Schaltungsstufe zur Kompensation des Temperatureinflusses auf die Strahlungsleistung, wobei zur Kompensation von Temperaturänderungen, die durch die elektrische Verlustleistung in der LED auftreten, dieser eine nicht-lineare Kompensationsstufe vorgeschaltet ist, gekennzeichnet durch eine zweite mit der ersten nicht-linearen Kompensatonsstufe (72) in Reihe geschaltete nicht-lineare Kompensationsstufe (75) und eine Schaltungsstufe (73), die zwischen den ansteigenden und abfallenden Flanken des LED-Ansteuersignals ($U_E$) unterscheidet und bei Auftreten einer abfallenden Flanke die zweite nicht-lienare Kompensationsstufe (75) zusätzlich zur ersten Kompensationsstufe (72) wirksam macht.

3. Schaltungsanordnung nach Anspruch 1 oder 2, dadurch gekennzeichnet, daß die Zeitkonstante der nicht-linearen Kompensationsstufe zwischen zwei Zeitkonstantenwerten ($\tau_1$, $\tau_2$) umschaltbar ist, und zwischen den ansteigenden und abfallenden Flanken des LED-Ansteuersignals ($U_E$) unterscheidende Schaltungsstufe (63, 73) die Umschaltung vornimmt.

4. Schaltungsanordnung nach einem der Ansprüche 1 bis 3, dadurch gekennzeichnet, daß die nicht-lineare Kompensationsstufe (42) bzw. die nicht-linearen Kompensationsstufen (64, 65 bzw. 72,75) RC-Glieder aufweisen.

5. Schaltungsanordnung nach einem der Ansprüche 1 bis 3, daudrch gekennzeichnet, daß die nicht-lineare Kompensationsstufe (42) bzw. die nicht-linearen Kompensationsstufen (64,65 bzw. 72,75) LR-Glieder aufweisen.

**Claims**

1. Driver circuit for a light-emitting diode with a circuit for compensating the influence of temperature on the radiation power, whereby, in order to compensate for changes in temperature caused by electrical power dissipation in the LED, a non-linear compensating circuit is connected upstream in series with this circuit, **characterized** by two non-linear compensating circuits (64, 65) and a circuit (63) which differentiates between the rising and falling edges of the LED drive signal ($U_E$), and consequently activates one of the compensating circuits (64, 65).

2. Driver circuit for a light-emitting diode with a circuit for compensating the influence of temperature on the radiation power, whereby, in order to compensate for changes in temperature caused by electrical power dissipation in the LED, a non-linear compensating circuit is connected in series with this circuit, **characterized** by a non-linear compensating circuit (72) connected in series with a second non-linear compensating circuit (75), and a circuit (73) which differentiates between the rising and falling edges of the LED drive signal ($U_E$) and which, in addition to the first compensating circuit (72), activates the second non-linear compensating circuit (75) when a falling edge occurs.

3. Driver circuit according to claim 1 or 2, **in such a way characterized** that the time constant of the non-linear compensating circuit can be switched between two time constant values ($\tau_1$, $\tau_2$), the switching being performed by the circuits (63, 73) which differentiate between the rising and falling edges of the LED drive signal ($U_E$).

4. Driver circuit according to one of the claims 1 to 3, **in such a way characterized** that the non-linear compensating circuit (42) or the non-linear compensating circuits (64, 65 or 72, 75) contain RC elements.

5. Driver circuit according to one of the claims 1 to 3, **in such a way characterized** that the non-linear compensating circuit (42) or the non-linear compensating circuits (64, 65 or 72, 75) contain LR elements.

**Revendications**

1. Circuit d'attaque pour diode émettrice de lumière, avec un étage de compensation de l'influence de la température sur le flux énergétique de rayonnement, précédé d'un étage de compensation non linéaire destiné à compenser les variations de température provoquées par la perte de puissance électrique se produisant dans la LED, **caractérisé** par deux étages de compensation non linéaires (64, 65) et un étage (63) qui fait la distinction entre les flancs de montée et de descente du signal d'attaque ($U_E$) de la LED et qui, en fonction de la nature de ce signal, rend actif l'un ou l'autre des deux étages de compensation (64, 65).

2. Circuit d'attaque pour diode émettrice de lumière, avec un étage de compensation de l'influence de la température sur le flux énergétique de rayonnement, précédé d'un étage de compensation non linéaire destiné à compenser les variations de température provoquées par la perte de puissance électrique se produisant dans la LED, **caractérisé** par un second étage de compensation (75), non linéaire, monté en série avec le premier étage de compensation non linéaire (72), et par un étage (73) qui fait la distinction entre les flancs de montée et de descente du signal d'attaque ($U_E$) de la LED et qui, lorsque se produit un flanc de descente, rend actif le second étage de compensation non linéaire (75), en plus du premier étage de compensation (72).

3. Circuit selon les revendications 1 ou 2, **caractérisé en ce** que la constante de temps de l'étage de compensation non linéaire peut être commutée entre deux valeurs de constante de temps ($\tau_1$, $\tau_2$) et en ce qu'un étage de compensation (63, 73), faisant la distinction entre les flancs de montée et de descente du signal d'attaque ($U_E$) de la LED, procède à la commutation.

4. Circuit selon l'une des revendications 1 à 3, **caractérisé en ce** que l'étage de compensation non linéaire (42) ou les étages de compensation non linéaires (64, 65 ou 72, 75) présentent des circuits RC.

5. Circuit selon l'une des revendications 1 à 3, **caractérisé en ce** que l'étage de compensation non linéaire (42) ou les étages de compensation non linéaires (64, 65 ou 72, 75) présentent des circuits LR.

Fig. 1

Fig. 2

Fig. 3

Fig. 5

41    42    43

$U_E$

Fig. 4

61    62    64    66

$U_E$

63    65

1

Fig. 6

71    72    74    75    77

$U_E$

73    76

1

Fig. 7